Europäisches Patentamt

(19) European Patent Office

Office européen des brevets

(11) Publication number: **0 178 806**
A2

(12) # EUROPEAN PATENT APPLICATION

(21) Application number: **85306704.9**

(22) Date of filing: **20.09.85**

(51) Int. Cl.⁴: **G 02 B 6/28**

(30) Priority: **17.10.84 US 661630**

(43) Date of publication of application:
**23.04.86 Bulletin 86/17**

(84) Designated Contracting States:
**DE FR GB**

(71) Applicant: **SPERRY CORPORATION**
**1290 Avenue of the Americas**
**New York, NY 10104(US)**

(72) Inventor: **Gilligan, Lawrence Henry**
**3022 Colonial Drive**
**Charlottesville, VA. 22901(US)**

(72) Inventor: **Gerdt, David William**
**703 Lyons Avenue**
**Charlottesville, VA 22901(US)**

(74) Representative: **Singleton, Jeffrey et al,**
**ERIC POTTER & CLARKSON 27 South Street**
**Reading Berkshire, RG1 4QU(GB)**

(54) Variable coupler fibreoptic sensor.

(57) A variable coupler fibreoptic sensor in which a fused, tapered, biconical directional fibreoptic coupler (13) is encapsulated in a stress birefringent medium (15) the index of refraction of which changes with applied stress. The ratio of power in the output fibres (14) of the directional coupler varies with the change of index of refraction of the encapsulating medium as stress is applied to that medium.

FIG.1.

## VARIABLE COUPLER FIBREOPTIC SENSOR

The invention relates to fibreoptic sensors whose operation is based on varying the ratio of output power in a fibreoptic directional coupler.

Sensors, such as accelerometers, microphones, hydrophones and magnetometers including both electromechanical devices and, more recently, fibreoptic devices are well known. Fibreoptic sensors offer advantages in D.C. sensitivity, dynamic range, and interference rejection.

Existing fibreoptic sensors have used such principles as light phase interference, polarisation rotation by means of birefringence and microbending loss. Prior art fibreoptic sensors may generally be categorised as either amplitude or phase (interferometric) sensors.

In an amplitude sensor, a physical perturbation interacts with the fibre or some device attached to the fibre directly to modulate the intensity of the light in the fibre. Phase sensors, while offering increased sensitivity over amplitude sensors has been described by Giallorenzi, et al in "Optical Fibre Sensor Technology", IEEE Journal of Quantum Electronics, Vol. QE18, No. 4, April 1982, pp. 626-665. While progress in fibreoptic technology has been rapid, practical problems remain, for example, in noise sources, detection processing and packaging.

The present invention is defined in the appended claims and adds another category of fibreoptic sensors to the art which may be called ratio sensors. The ratio of light energy in the output fibres changes in response to applied stress on a medium surrounding a fibreoptic directional coupler. In one embodiment, the present invention provides a fibreoptic sensor apparatus comprising a fused, tapered biconical directional coupler surrounded by a stress birefringent medium. A transducer mechanism, for example a proof mass for an accelerometer, a diaphram for a microphone or pressure sensor, or a magnetostrictive envelope for a magnetometer, converts the parameter to be sensed into a force directly applied to the stress birefringent medium. The applied stress, which may be external or internal to the medium, changes the refractive index of the birefringent medium which causes the ratio of output power in each branch of the directional coupler to vary.

A fibreoptic sensor in accordance with the present invention will now be described in greater detail, by way of example, with reference to the accompanying drawings, in which:-

Figure 1 illustrates the components of a variable coupler fibreoptic sensor of one embodiment of the invention,

Figure 2a is a cross-sectional view of a sensor of the present invention configured as an accelerometer, and

Figure 2b is a section along the line 2b-2b of Figure 2a.

A description and analysis of biconical single mode fibreoptic couplers suitable for use with the present invention has been made by J. Bures, et al in an article entitled "Analyse d'un Coupleur Bidirectionnel a Fibres Optiques Monomodes Fusionnes", Applied Optics, (Journal of the Optical Society of America) Vol. 22, No. 12, June 15, 1983, pp. 1918-1922 and is incorporated herein by reference.

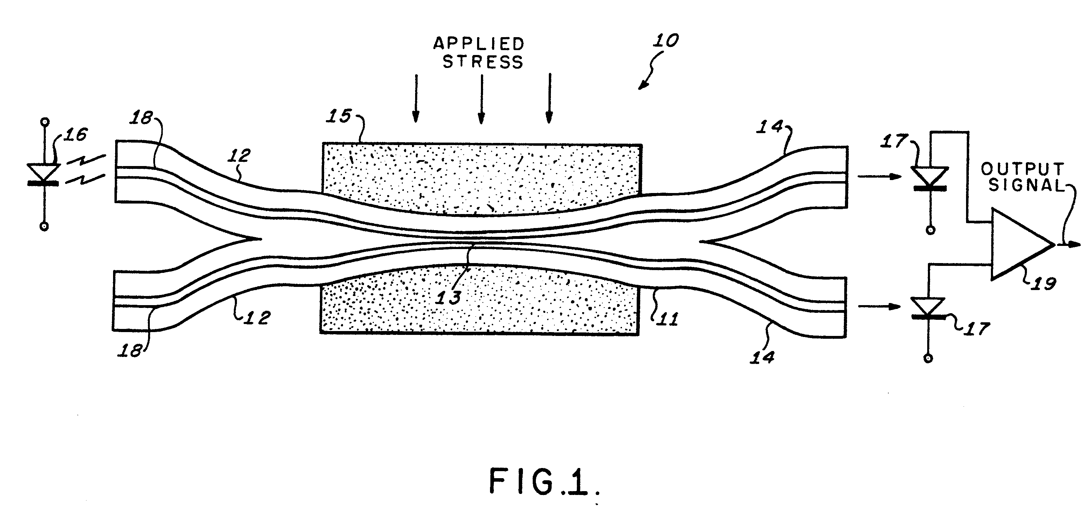

Referring now to Figure 1, the variable coupler fibreoptic sensor 10 of the present invention is illustrated. A fused biconical fibreoptic directional coupler 11 is manufactured from two input fibres 12 by known techniques. The resulting waist portion 13 has a reduced diameter due to the fusion and stretching operations. In the waist portion 13, the cores 18 of the fibres lose their guiding properties and waist portion 13 as a whole may become for example, in cross-section, an elliptical shaped guide with the surrounding medium 15 for cladding. Thus, in the waist portion 13, the biconical fused directional coupler 11 becomes for all practical purposes a single guide in which the cores 18 of the original fibres 12 play an insignificant role and coupling of light energy to two output fibres 14 is accomplished by a beat phenomenon between two modes in the waist portion 13. The division of optical energy in the output fibres 14 caused by the beat phenomenon is a function both of the physical dimensions of the fused waist portion 13 and the index of refraction of the medium 15 surrounding the waist portion 13. The medium 15 may be, for example, a stress birefringent material, that is a material the index of refraction of which is proportional to applied stress. One example of a stress birefringement material suitable for use as the medium 15 of the present invention is a silicone elastomer such as that produced by General Electric Co. and known as RTV-12. However, any material the index of refraction of which varies as a function of applied stress may be suitable to practice the present invention.

In practice, one input fibre 12 is illuminated by a source of optical energy 16 which may be an infrared source. The optical energy is divided by the fused biconical directional coupler and coupled to the output fibres 14 in a ratio that changes as the index of refraction of the medium 15 changes as a function of the applied stress. The changes in optical energy in the output fibres 14 are measured by two photodetectors 17 which provide electrical inputs to a differential amplifier 19. Thus the output signal of differential amplifier 19 is representative of the stress applied to the medium 15.

Stress may be applied to the fibreoptic sensor 10 through an internal or external mechanism. To apply stress internally, a macroscopic stress state may be created by adding various materials to the medium 15, ideally in the form of microscopic particles mixed into medium 15 before it is cured. For example, to sense electric fields, an electro-strictive powered material such as $PVF_2$ may be added to the medium 15. The present invention may be used as a thermal sensor by adding a thermally expansive material, such as nickel or aluminum, to the medium 15. To sense magnetic fields, a magnetostrictive alloy, such as nickel and iron may be added to the medium 15. Polystryene or nylon may be added to the medium 15 to enhance sensitivity when the present invention is used as an acoustic sensor.

Stress may be applied externally by a force which is transmitted directly into the medium 15. External stress may be applied to the medium 15 by macroscopic devices such as, for example, diaphrams, levers, electro-strictive, magnetostrictive and thermostrictive elements. In general, any mechanism that converts a physical or field effect into a force may be used to apply stress to a stress birefringent material and thereby may be sensed by optical means through the present invention.

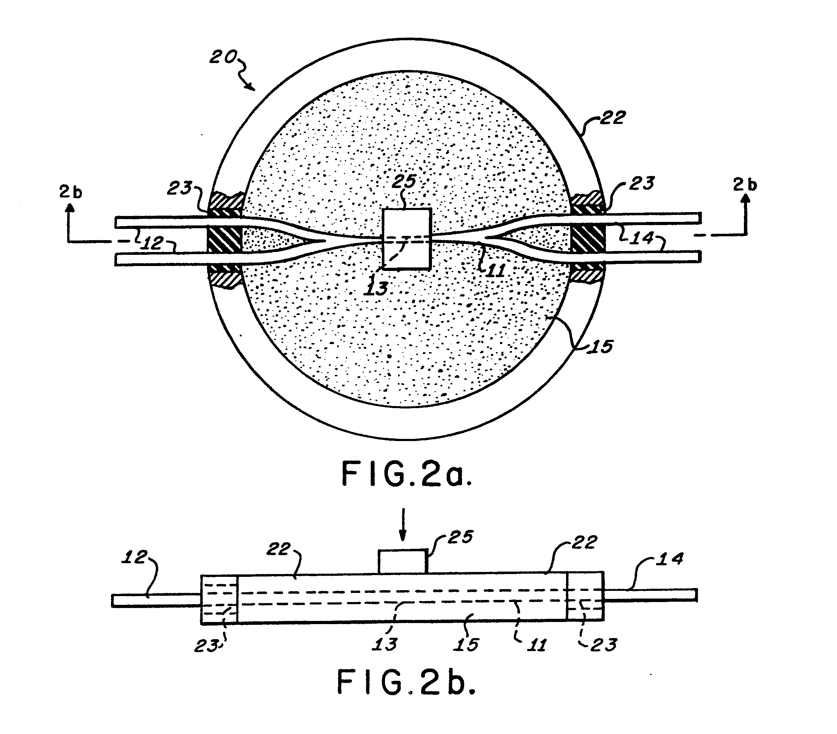

Referring now to Figure 2a and 2b, an embodiment of the present invention used as an accelerometer 20 is illustrated. A fused, biconical, directional ratio coupler 11 is placed within a rigid cylinder 22. Input fibres 12 and output fibres 14 extend through the cylinder wall and are held in place with an epoxy resin 23. The interior of the cylinder 22 is filled with a stress birefringent silicone elastomer 15 such as General Electric's RTV-12 referred to above which encapsulates the fused, biconical, directional coupler 11. A proof mass 25 is disposed on top of the stress birefringenet medium 15 at the centre of the cylinder 22. The ratio of output power and the change in the ratio of output power proportional to applied stress is a function of the optical, material and geometric properties of the apparatus. More specifically, the coupling ratio factors include:

1.  The index of refraction of the medium 15;
2.  The length of the waist portion 13;
3.  The length of the transition region between the waist portion 13 and the input fibres 12 and the output fibres 14;
4.  The diameter of the fibres 12 and 14 and the diameter of the waist portion 13;
5.  The wavelength of light source 16; and
6.  The properties of the fibre selected.

By selecting a suitable configuration of material, desired operating points and changes in output power ratios may be achieved.

Claims

1.   A fibreoptic sensor comprising fibreoptic coupler
means (13) for dividing input light energy among a
plurality of output fibres, characterised in that it
further comprises a medium (15) for encapsulating the
fibreoptic coupler means wherein the index of refraction
of the medium is a function of stress applied to the
medium, and detector means (17, 19) for providing an
output signal representative of the ratio of energy in
the output fibres.

2.   A fibreoptic sensor according to claim 1,
characterised in that the medium (15) is a stress
birefringent silicone elastomer.

3.   A fibreoptic sensor according to claim 1 or 2,
characterised in that an external stress is applied to
the medium (15).

4.   A fibreoptic sensor according to claim 1 or 2,
characterised in that an internal stress is applied to
the medium (15) by combining therein materials responsive
to a parameter to be sensed.

5.   A fibreoptic sensor according to any of the
preceding claims, characterised in that the fibreoptic
coupler (13) is a fused, tapered, biconical directional
fibreoptic coupler.

6.   A fibreoptic sensor according to any of the
preceding claims, characterised in that the input light
energy is infrared energy.

7.   A fibreoptic sensor according to any of the
preceding claims, characterised in that the detector
means comprises a plurality of photodetector diodes (17)
disposed to receive energy from the output fibres and a
differential amplifier (19) to receive the outputs of the
photodetector diodes and provide the output signal.

8.   A fibreoptic sensor according to any of the
preceding claims, characterised in that the sensor is
configured as an accelerometer and the coupler (13) and the medium (15) are contained within a housing (22) with
the input and output fibres (12, 14) extending through
the wall of the housing.

APPLIED
STRESS

10

16    18    15        14    17

12

OUTPUT
SIGNAL

18    12    13    11    14    17

19

1/2

FIG.1.

0178806

FIG.2a.

FIG.2b.

0178806